# EUROPEAN PATENT APPLICATION

(11) **EP 2 011 846 A1**
(43) Date of publication of application: **07.01.2009**
(21) Application number: 07738311.5
(22) Date of filing: 12.03.2007
(51) Int. Cl.: C09K 5/16, A47J 36/28, B65D 81/34

(54) **APPARATUS FOR HEATING FOOD**

(30) Priority: 21.04.2006 JP 2006117741
(71) Applicant: Mycoal Co., Ltd., Tochigi-shi, Tochigi 328-0067 (JP)
(72) Inventor: URUME, Yukio, Tochigi-shi, Tochigi 328-0067 (JP); KIMURA, Hisao, Tochigi-shi, Tochigi 328-0067 (JP); TAKAIWA, Mikio, Tochigi-shi, Tochigi 328-0067 (JP); KUMAGAI, Yukako, Tochigi-shi, Tochigi 328-0067 (JP); MINE, Yumiko, Tochigi-shi, Tochigi 328-0067 (JP)
(74) Representative: Albrecht, Thomas
(86) International application number: PCT/JP2007/054839
(87) International publication number: WO 2007/122900

(57) **Abstract**

The heat source 1 comprises a bag 10 and a heat-generating composition 20 containing aluminum powder, calcium hydroxide powder and calcium oxide powder, enclosed in the bag 10. The bag 10 is formed by a packing material made of a base material of nonwoven fabric of which one surface is laminated with a watertight layer. The packing material is punched with a plurality of pinholes and has a water permeable rate of 13 to 81 milliliter/min/1cm² measured when head of water is 27cm. The heat source 1 can satisfy preferable heating conditions including rate of temperature rise of the food, risen temperature of the food, duration of the risen temperature of the food under conditions in which a food heating device is conventionally used. Accordingly, a food heating device using the heat source capable of causing a rapid and stable heat-generating reaction can be provided.

## Description

### Technical Field

The present invention relates to a food heating device to heat a food (cooked food such as a retort-packed food and canned drink) using a heat source activated by reaction with water. More particularly, it relates a food heating device improved in heat-generating property when temperature of water to be used is low.

### Background Art

As a heat source activated by reaction with water, a mixture of aluminum powder and calcium oxide powder has been popularly used for a heat-generating composition (referring to Patent literature 1, for example). And, a food heating device to heat a lunch bag or Japanese sake, or to re-heat a cooked food such as a retort-packed food in emergency situations, which uses the heat source, has been also known.

In such the heat-generating composition, the calcium oxide powder is reacted with the water to generate heat and also calcium hydroxide produced by the reaction is reacted with the aluminum powder to generate heat. The group of reactions makes it possible to generate enough amounts of heat to warm the food within a short period. The above Japanese Patent shows that the disclosed heat-generating composition generates heat of about 100°C after about 30 seconds from the reaction and the temperature is kept for 20 minutes or longer. And, the heat-generating composition has advantages in which it reacts without generating odor, and a small amount of the composition is enough for generating sufficient amounts of heat.
Patent literature 1: Japanese Patent number 3467729

### Disclosure of the Invention

### Problems to be solved by the Invention

In the aforesaid food heating device, the heat-generating composition is enclosed in an inner bag made by nonwoven fabric and further tightly enclosed in a watertight outer bag. When to be used, the enclosed heat-generating composition is taken out of the outer bag and comes in contact with water, resulting in that the heat-generating composition in the inner bag contacts the water to be reacted. The water permeates the inner bag made by nonwoven fabric and reacts with the heat-generating composition in the inner bag. In this case, it is considered that the faster the water contacts the heat-generating composition, the faster the heat-generating reaction proceeds. The generated heat diffuses through the heated water and water vapor. And, it is also considered that the higher the water permeability of the inner bag is, the faster the rate of the heat diffusion is. Accordingly, it is considered that an efficiency of the water permeation of the inner bag (water permeability) influences the proceeding of the heat-generating reaction of the heat-generating composition. However, in such food heating devices, development and proposal concerning to the water permeability of the inner bag have not been done.

Such a food heating device is sometimes used under a condition in which temperature of the water to be reacted is low. Therefore, such a food heating device is required which has excellent heat-generating abilities (rate of temperature rise, heat retaining period and the like) even under a condition in which temperature of the water to be reacted is low.

In view of this regard, the present invention focuses attention on the permeability of the inner bag and the object of the present invention is to provide a food heating device utilizing a heat source capable of a rapid and stable heat-generating reaction. Another object of the present invention is to provide a food heating device having a heat source providing excellent heat-generating abilities even when it reacts with low-temperature water.

### Means of Solving the Problems

A food heating device according to the present invention comprises a heat source and a container having an exhaust vent, in which said heat source is put in said container together with a food to be heated and water is added to said container so that said heat source is reacted with said water to generate heat and to heat the food by the generated heat. And, said heat source comprises: a bag formed by a packing material made of a base material of nonwoven fabric of which one surface is laminated with a waterproof layer, said packing material being punched with a plurality of pinholes, and a heat-generating composition containing aluminum powder in an amount of 40 to 60% by weight, calcium hydroxide powder in an amount of 10 to 40% by weight and calcium oxide powder in an amount of 10 to 40% by weight, enclosed in said bag, said packing material has a water permeable rate of 13 to 81 milliliter/min/lcm² measured under the following measurement conditions (1) to (4):
(1) ion-exchanged water of 23±3°C is used,
(2) head of water is 27±0.95cm,
(3) a water permeable area of said packing material is 2.85cm², and
(4) the water permeable amount (milliliter) is defined in such a manner that after an amount of the permeated water per unit time gets constant (after a variation in amount of the permeated water per 10 seconds is within 5% at least consecutive three times), an amount of the permeated water measured in any one minute during the measurement for one minute or more is converted into a water permeable amount (milliliter) using a specific gravity of the ion-exchange water of 1.000 (g/cm³).

On reacting with water, calcium hydroxide (Ca(OH)₂) is hydrolyzed to exhibit strong alkaline. It is known that water-solubility of calcium hydroxide becomes high as the temperature of the water is low (for example, 0.189wt% at 0°C and 0.106wt% at 80°C). On the other hand, while aluminum does not react with water at room temperatures, it reacts with water under alkaline environment to cause the following decomposition reaction of water:

2Al+2OH⁻+6H₂O→2Al(OH)₄⁻+3H₂.

When calcium hydroxide (Ca (OH)₂) is used as an alkaline material, the above reaction formula is as follows:

2Al+Ca(OH)₂ +6H₂O-Ca²⁺+2Al(OH)₄⁻+3H₂.

Since Ca²⁺ and 2Al(OH)₄⁻, shown in the right-side hand in this formula, does not exhibit alkaline as strong as NaOH and KOH and an amount of dissociated Ca²⁺ and 2Al(OH)₄⁻ is significantly small, both ions are combined into CaO·Al₂O₃·4H₂O. However, since the reaction proceeds in alkaline aqueous solution, the following reaction occurs: 2Al+Ca(OH)₂ +2H₂O→CaO·Al₂O₃+3H₂+183.7Kcal.
Therefore, in order to sift the chemical equilibrium toward the right-side hand, that is, to produce a heat-generating reaction, it is necessary that the dissolved Ca(OH)₂ be hydrolyzed to shift the pH toward alkaline and to increase the dissolution rate of the aluminum.
Accordingly, by adding calcium hydroxide powder, which has a higher water-solubility under low-temperature environments, to the mixed powder previously, an excellent heat-generating ability can be provided even if temperature of the water to be reacted is low.

For heating a food, NaOH and KOH can not be used as an alkaline material because of the poisonous property. Or, substances which are easily dissociated by hydrolysis are also not suitable for heating a retort-packed rice and the like because the reaction terminates quickly. It means that an amount of heat which is discharged out of the food heating device is so large that the reaction can not proceed continuously.

Accordingly, it is preferable to use calcium hydroxide as an alkaline material in view of cost and manufacturing method.

According to the present invention, by control ling water permeable rate of the bag, the proceeding of the heat-generating reaction can be controlled. That is, when a water permeable rate of the inner bag is set to 13 to 81 milliliter/min/1cm², preferably 13 to 65milliliter/min/lcm², and more preferably 22 to 44 milliliter/min/1cm² measured when head of water is 27cm, preferable heating conditions including rate of temperature rise of a food, risen temperature and duration of the risen temperature under conditions in which a food heating device is typically used can be obtained. And, leakage of the heat-generating composition from the bag can be prevented.

In the present invention, the heat-generating composition contains calcium oxide powder in an amount of 10 to 40% by weight.

In this case, the calciumoxide (CaO) causes the following hydration reaction;

CaO+H₂O→Ca(OH)₂+15.6Kcal.

The hydration reaction also generates heat and the produced Ca (OH) ₂ reacts with aluminum to generate heat because it is an alkaline material. Accordingly, rate of temperature rise becomes fast.

In the present invention, the heat-generating composition contains aluminum powder in an amount of 40 to 60% by weight and calcium oxide powder in an amount of 10 to 40% by weight.

A heating device in which a heat-generating composition containing aluminum powder and calcium oxide (CaO) powder is reacted with water to generate heat has been widely known. The present inventors have found that an addition of calcium hydroxide (Ca(OH)₂) to the above heat-generating composition allows an excellent heat-generating abilities even if temperature of water to be reacted is low. By using such a heat-generating composition, it becomes possible to accomplish a request for heating a food (retort-packed cooked curry or rice, 350-milliliter plastic bottled tea and the like) to 40°C or higher after 5 minutes from the heat-generating reaction, to 60°C or higher after 10 minutes and to keep the temperature after 20 minutes when temperature of water to be reacted is low as 5 to 30°C (an environmental temperature is -10 to 40°C), for example.

Examples of the heat-generating composition and nonwoven fabric for use in the prevent invention are described below.
Examples of the nonwoven fabric include natural fabric such as cotton and wool; regenerated fiber such as viscose (rayon) and cupra; polyamide such as nylon 6, nylon6, 6; straight-chain or branched polyesters having 20 or less carbon atoms such as polyethylene terephthalate, polytrimethylen terephthalate, polybutylene terephalate, polylactic acid and polyglycolic acid; polyolefins such as polyethylene and polypropylene; and synthetic fiber such as acrylic. Two or more kinds of those materials may be used together. The nonwoven fabric may be made by a spunlaced method, spunbond method and the like.

Exemplary properties of the nonwoven fabric are followed: basisweight (g/m²); 40-70, thickness (µm); 170-460, longitudinal tensile strength (N/5cm); 35∼380, transverse tensile strength (N/5cm); 13∼165, longitudinal extensibility (%); 80 and below and transverse extensibility (%); 120 and below.
The watertight layer may be formed by laminating a synthetic-resin film on the nonwoven fabric. Exemplary synthetic-resin films include polyolefin resin such as polyethylene and polypropylene; polyamide resin; polyester resin; polyvinyl chloride resin; polystyrene resin; copolymer polyamide resin; copolymer polyester resin; ethylene-vinyl acetate resin; elastmer; and mixed resin of two or more of those resins. The synthetic-resin film may be a single layer or laminated layer. The synthetic-resin film has a thickness of 0.01 to 0.3mm, preferably 0.02 to 0.1mm

In order to heat a retort-packed cooked rice or curry and plastic bottled tea, the heat-generating composition preferably has a weight of 30g or more. A weight ratio of the aluminum powder, the calcium hydroxide powder and the calcium oxide powder of the heat-generating composition is set to 40∼60:10-40:10∼40. Especially, in view of rate of temperature rise and duration of the risen temperature, a weight ratio of the aluminum powder, the calcium hydroxide powder and the calcium oxide powder is preferably set to 40∼50:15∼40:20∼40.

The aluminum powder preferably has following grain size distribution: ∼45µm; 70∼95%, 45∼63µm; 5-20%, 63∼75µm; 0-5% and +75µm; 0-5%.
The calcium hydroxide powder preferably has following grain size distribution: ∼45µm; 0∼10%, 45∼75µm; 0-30%, 75∼150µm; 20∼45% and +150µm; 30∼78%
The calcium oxide powder preferably has following grain size distribution:∼75µm; 5∼25%, 75∼150µm; 20∼40% and +150µm; 45-65% or ∼75µm; 25-90%, 75∼150µm; 5∼70% and +150µm; 0∼15%.

Examples of the food to be heated include a food such as a retort-packed food, canned drink, boiled egg and lunch bag.
The container may have any forms including a bag, box and pan. The exhaust vent is for discharging H₂ and H₂O produced by the aforesaid heat-generating reaction. A size and number of the vent is selected such that expansion and breakage of the container can be prevented while keeping heat-retaining property.

### Advantageous Effect of the Invention

As described above, according to the present invention, a food heating device utilizing a heat source, having preferable heating conditions including rate of temperature rise of the food, risen temperature of the food and duration of the risen temperature under conditions in which a food heating device is typically used, can be provided. Especially, a food heating device can be provided which has excellent heat-generating abilities even if temperature of the water to be reacted is low. And, the present invention shows that heat-generating ability of the heat source can be controlled by water permeability of the inner bag as well as the property of the heat-generating composition.

### Detailed Description of the Preferred Embodiments

Hereinafter, preferred embodiments of the present invention will be precisely described, referring to the drawings.
First, water permeability of an inner bag will be described.

### <Water permeability>

Sample bags made by various base materials which were punched with pinholes in various densities were prepared. And, water permeability (water permeable rate) of each sample was measured.

### (1) Base material

As the base material, a non water-repellent nonwoven fabric (made by 100% rayon, MR-50/PP40, manufactured by Kokko Paper Mfg. Co., Ltd.) was used. The nonwoven fabric has the followingproperties: basisweight (g/m²); 50, thickness (µm); 400, longitudinal tensile strength (N/25cm); 41, transverse tensile strength (N/25cm); 9.5, longitudinal extensibility (%); 27 and below and transverse extensibility (%); 120 and below. The nonwoven fabric is made by a spunlaced method in which columnar water flow injects toward fibers at high pressure to entwine the fibers and thus to produce a nonwoven fabric. The spunlaced method allows a production of a highly flexible napless nonwoven fabric having high drape property. A nonwoven fabric produced by the method is used for livelihood materials such as diaper, medical supplies, food supplies and cleaning supplies. On one surface of the nonwoven fabric, a water-resistant layer (made by polypropylene) was laminated. Or, the water-resistant layer may be made by a heating bonding and the like in exchange for the laminating. The water-resistant layer had a thickness of 40µm.

### (2) Pinholes

Each of the prepared base materials was punched with pinholes in various densities using a pinhole opening machine, which comprised a roller on which needles were arranged at intervals of 3.0mm in the transverse direction and at intervals of about 2.9mm in the longitudinal direction and a base material supporting roller confronting to the former roller. Or, another type of the pinhole opening machine may be used, which is provided with needles capable of being heated and the heated needles are made to contact the laminated film to fuse the film, resulting in opening pinholes. After the base material was supported to the base material supporting roller, each of the rollers rotated in opposite directions. As the result, pinholes were formed on the base material in substantially the uniform density over the almost full area. By changing a contact depth of the rollers, six base materials having various pinhole diameters were prepared. The pinhole diameters varied over a range of 0.05 to 0.4mm. The pinhole density was 1150/100cm². If the diameter of the pinhole is larger, the small particulate heat-generating composition may be leaked through the pinhole from the bag, causing unfavorable situation. Accordingly, the pinhole diameter should be small (0.05 to 0.4mm) within the scope showing excellent heat-generating property.
Each of the base materials was cut into a piece having a size of 50mm by 50mm to prepare a sample for measuring water permeability.

### (3) Water permeability

There is no official standard showing water permeability of fabric and the like. According to a method for measuring water permeable rate of perforated film, water permeability of each sample was examined by a water permeable rate measuring method, described later.

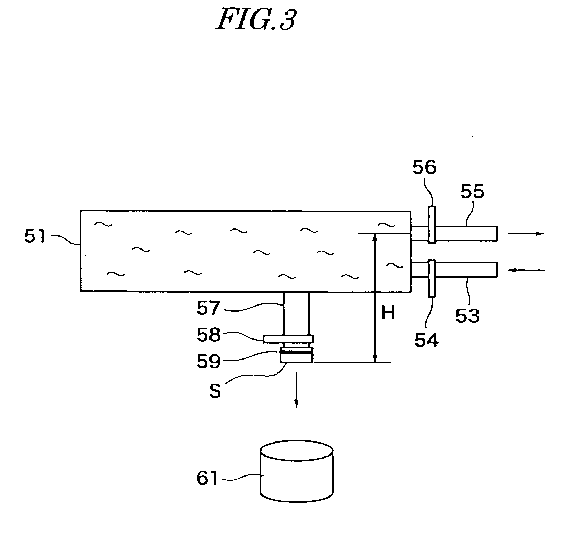

Fig.3 is a drawing showing the water permeable rate measuring method in the present invention.
A stainless-steel measuring tank 51 (inside dimension of 335x535x178mm) was prepared and filled with ion-exchange water of 23±3°C. An inflowpipe 53 fromwhich the ion-exchange water flowed in the tank 51 was formed at the under portion of the side wall of the tank 51 and an overflow pipe 55 was formed at the upper portion of the side wall of the tank 51. The pipes 53 and 55 were openable and closable by cocks 54 and 56, respectively. The ion-exchange water was poured into the tank 51 from the inflow pipe 53 and overflowed through the overflow pipe 55.

An outflow pipe 57 (diameter of 19.05mm) extending downward was formed on the bottom of the tank 51. The outflow pipe 57 was openable and closable by a cock 58. The sample base materials S was temporarily attached to the opening of the outflow pipe 57 by a rubber band 59 with the watertight surface of the sample S being upside. Then, the periphery of the sample was closely attached to the pipe by a sealing tape to block the opening with the sample S and then further tightly attached by a water impermeable adhesive tape made by polypropylene. A distance H between the opening of the outflow pipe 57 and the overflow port of the overflow pipe 55 was 270±9.5mm (head of water). Under the opening of the outflow pipe 57, a collection vessel 61 was disposed. The collection vessel 61 was set on a measurement apparatus (not shown, GF-3000, manufactured by A&D Co., Ltd.).

The tank 51 was kept the overflow state with the both cocks 54 and 56 opened. When the cock 58 of the outflow pipe 57 was opened, the water was collected by the vessel 61. And, the amount (milliliter) of the collected water was weighed. In this case, after an amount of the permeated water per unit time had got constant (after a variation in amount of the permeated water per 10 seconds was within 5% at least consecutive three times), an amount of the permeated water measured in any one minute during the measurement for one minute or more was defined as a water permeable amount (milliliter). And, a water permeable amount per one minuet per 1cm² of the sample was converted to water permeable rate (milliliter/min/cm²). Aspecificgravity oftheion-exchange water is set to 1.000 (g/cm³).

Then, a relation between the measured water permeable rate and publicly known air permeability was examined. Because, the measurement of the water permeable rate needs troublesome handling, and, therefore if the water permeable rate is correlated with the air permeability, the measurement of the air permeability can be employed in exchange for the measurement of the water permeable rate.
The air permeability was measured using a gurley type densometer (range;300ml, timer; s, t<1, a diameter of measuring section; 30mm, manufactured by Toyo Seiki Seisaku-Sho, Ltd., based on JIS P8117). The measured value (sec/300ml) was converted to an air permeable rate (milliliter/min/cm²).

The prepared six samples having various pinhole diameters were examined for water permeability using the aforesaid measuring apparatus and also for air permeability using the gurley type densometer.

Table 1 shows the measured air permeability, air permeable rate converted from the measured air permeability, the measured water permeability and water permeable rate converted from the measured water permeability.

**Table 1**

| Sample No. | air permeability | | water permeability | |
|---|---|---|---|---|
| | measured value | air permeable rate | measured value | water permeable rate |
| | (sec/300ml) | (ml/min./cm²) | (ml/min.) | (ml/min./cm²) |
| 1 | 31.4 | 81.1 | 37.05 | 13 |
| 2 | 18.3 | 139.15 | 67.6 | 23.72 |
| 3 | 11.4 | 223.38 | 114.34 | 40.12 |
| 4 | 9.3 | 273.81 | 126 | 44.21 |
| 5 | 6.3 | 404.2 | 185.35 | 65.03 |
| 6 | 5 | 509.3 | 233.01 | 81.75 |

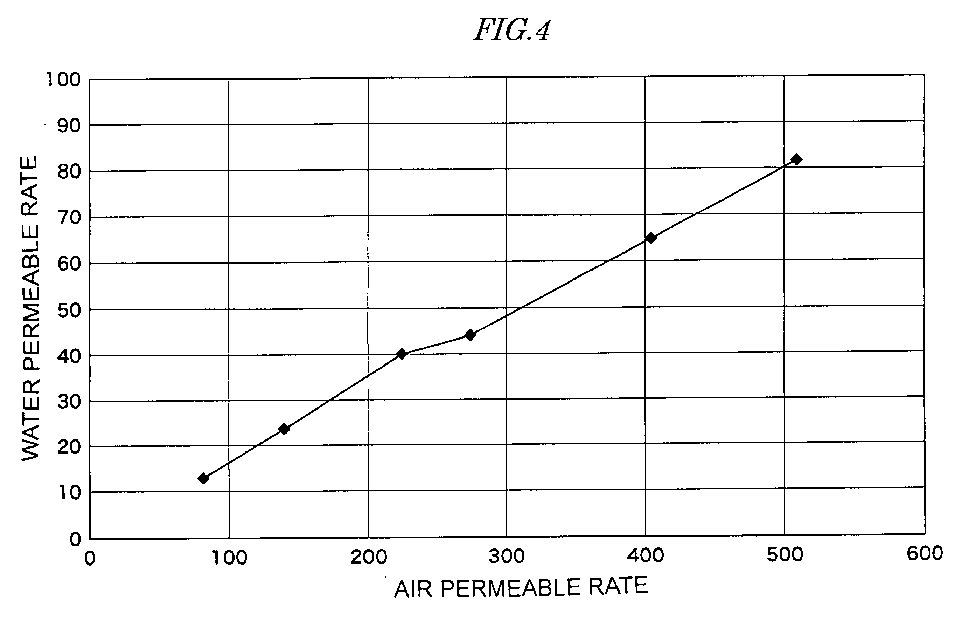

Fig.4 is a graph showing a relation between the air permeable rate and the water permeable rate. The vertical axis indicates the water permeable rate converted from the measured water permeability, and the horizontal axis indicates the air permeable rate converted from the air permeability measured by the gurley type densometer.
As shown in the graph, the water permeable rate can be expressed by a direct function of the air permeable rate. From the direct function, a ratio of the water permeable rate to the air permeable rate is substantially equal to 1/5.5 in a case of the packing material of the present invention.
The following examinations were carried out using the air permeable rate capable of converting to the water permeable rate because the measurement of the water permeable rate is a time-consuming process as described above. So, the water permeable rate was expressed as the air permeable rate divided by 5.5.

### <Relation between the water permeability of the bag and the temperature of heat source>

A heat source was produced using each of the prepared bags. And, a relation between the temperature of the heat source and the air permeability of the bags was examined.

### (1) Heat-generating composition

As the heat-generating composition, a mixed powder of aluminum powder (#280A, manufactured by MINALCO Co., Ltd.) of 20g, calcium hydroxide powder (tokusen, manufactured by Tagen lime industry) of 10g and calcium oxide powder (manufactured by Tagen lime industry) of 20g and was used.
The aluminum powder has the following grain size distribution: ∼45µm; 90.80%, 45∼63µm; 8.30%, 63∼75µm; 0.64% and +75µm; 0.25%. The calcium hydroxide powder has the following grain size distribution: ∼45µm; 4.60%, 45∼75µm; 21.90%; 75∼150µm; 35.92% and +150µm; 37.58%. The calcium oxide powder has the following grain size distribution : ∼75µm; 15.68%, 75∼150µm; 34.24% and +150µm; 50.07%.
The calcium oxide powder includes the following elements: calcium oxide (measured by an EDTA titration method (NN indicator)); 93% or more, carbon dioxide (measured by a Storelain method); 2.0% and below and impurities (measured by an EDTA titration method, perchloric acid method, absorption spectroscopy); 3.2% or less. The impurities include silicon dioxide, aluminum oxide, ferric oxide and magnesium oxide.

### (2) Samples of the bag

The same nonwoven fabric as that used for the measurement of the water permeability was used. By varying a contact depth of the rollers and thus varying the pinhole diameter, the samples of nonwoven fabrics in various air permeable rates, described below, were prepared.
Sample 1; 60∼110 (milliliter/min/cm²),
Sample 2; 110∼180 (milliliter/min/cm²),
Sample 3; 180-250 (milliliter/min/cm²),
Sample 4; 250-340 (milliliter/min/cm²),
Sample 5; 340-450 (milliliter/min/cm²) and
Sample 6; 450-550 (milliliter/min/cm²).
By using the samples, the bag having a receptacle for containing the heat-generating composition was produced. The receptacle had a size of 70mmx170mm.

### (3) Method for measuring temperature

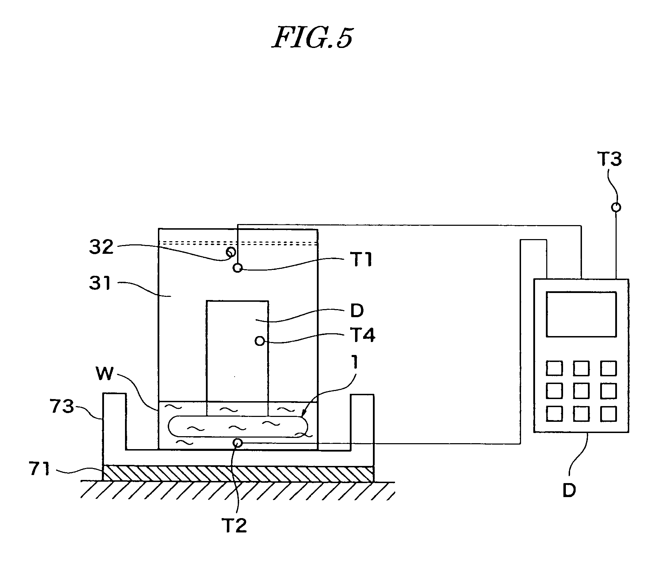

Fig.5 is a drawing showing the method for measuring the temperature.
The heat source 1, a food F (a retort-packed cooked rice and a 350millilitter-plastic bottled tea, or a retort-packed cooked rice and a retort-packed curry) and water of 130g were put in a heating bag 31 having exhaust vents 32. In this example, the heating bag 31 was openable and closable and had two exhaust vents 32 having a diameter of 5mm. In a temperature-controlled room of which room temperature was kept at 20°C (in a case of measurement under a low-temperature environment, the temperature was kept at -10∼105°C), the heating bag 31 was supported in a stainless-steel container 73 set on a heat insulating material 71. And, for 20 minutes after the heat-generating reaction, a temperature T1 in the heating bag 31 (steam temperature), a temperature T2 of the heated water, an environmental temperature T3 and a temperature T4 of the food were measured by the measuring apparatus D.

Next, whether the food temperature T4 of each sample satisfied the following heating conditions under the temperature-controlled room was considered.

### Condition A

1) 40°C or higher after 5 minutes.
2) 60°C or higher after 10 minutes.
3) 60°C or higher after 20 minutes.

### Condition B

1) 50°C or higher after 5 minutes.
2) 60°C or higher after 10 minutes.
3) 65°C or higher after 20 minutes.

### Condition C

1) 60°C or higher after 5 minutes.
2) 65°C or higher after 10 minutes.
3) 65°C or higher after 20 minutes.

Table 2 shows a result whether the samples satisfied the heating conditions.

**Table 2**

| Sample No. | condition A 40°C or higher after 5 min. 60°C or higher after 10 min. and 60°C or higher after 20 min. | condition B 50°C or higher after 5 min. 60°C or higher after 10 min. and 65°C or higher after 20 min. | condition C 60°C or higher after 5 min. 65°C or higher after 10 min. and 65°C or higher after 15 min. |
|---|---|---|---|
| 1 | ○ | × | × |
| 2 | ○ | ○ | ○ |
| 3 | ○ | ○ | ○ |
| 4 | ○ | ○ | ○ |
| 5 | ○ | × | × |
| 6 | × | × | × |

From these results, the following were obtained:
(1) Temperature of the heat source can be controlled by the air permeable rate of the bag.
(2) The air permeable rate of the bag required for heating a food is 110 to 340 milliliter/min/cm² (water permeable rate is about 24 to 44 milliliter/min/cm²).
However, even when the air permeable rate is 60 to 450 milliliter/min/cm² (water permeable rate is about 13 to 65 milliliter/min/cm²), it is possible to heat the food.
Moreover, even when the air permeable rate is 60 to 550 milliliter/min/cm² (water permeable rate is about 13 to 81 milliliter/min/cm²), if the food is small (for example, a retort-packed rice), it is possible to heat such a food.
Accordingly, a preferable water permeable rate of the bag for heating a food is 13 to 81 milliliter/min/cm².

It is considered that the heat-generation of the heat-generating composition is caused by a heat-generating reaction of the aluminum after a formation of alkaline environment resulting from hydrolysis of the calcium hydroxide, as described above, and also by a heat-generating reaction of the aluminum activated by a heat-generating resulting from a hydration reaction of the calcium oxide. Under a low-temperature (low-water temperature) condition, either one of the heat-generating reactions alone will not generate sufficient amount of heat. However, when a part of the calcium hydride is replaced by the calcium hydroxide, rate of temperature rise becomes better. The reason is because when the aluminum powder and calcium hydroxide powder exist, while Ca (OH)₂ has a high water-solubility, since the dissolved Ca(OH)₂ hydrolyses slowly under low-temperature conditions, a dissolution rate of aluminum may be also slow and therefore the reaction of the aluminum powder may be initiated slowly.

On the other hand, when the aluminum powder and calcium oxide (CaO) powder exist, Ca(OH)₂ produced by a hydration reaction of CaO does not have so high water-solubility because the water temperature rises rapidly to 70 to 80°C due to heat generated by the aforesaid hydration reaction. Accordingly, although hydrolysis rate is rapid, it requires a longer time until the pH sifts toward alkalis.

When the aluminum powder, calcium hydroxide powder and calcium oxide powder exist, Ca(OH)₂ dissolves just after the hydrolysis. And, the hydrolysis rate becomes higher due to heat produced by the hydration of CaO and therefore a period until the starting of dissolution of the aluminum becomes shorter. Accordingly, the heat-generating reaction begins rapidly even under low-temperature environments and thus rate of temperature rise can be improved. Therefore, when the water permeable rate of the bag is set smaller than that in a case in which the aluminum powder and calcium oxide powder exist, the temperature lasting ability can be improved.

Next, an effect of a construction and amount ratio of the heat-generating composition on the temperature of the heat source under a low-temperature condition (a temperature of water to be reacted is 5°C) will be described.

### (1) An amount ratio of the heat-generating composition

By using the aluminum powder, calcium oxide powder and calcium hydroxide powder used for the aforesaid measurement of water permeability, the following samples were prepared (a total weight of 50g).
(1) Sample 1; aluminum powder : calcium hydroxide powder : calcium oxide powder =50:15:35,
(2) Sample 2; aluminum powder : calcium hydroxide powder : calcium oxide powder =60:10:30,
(3) Sample 3; aluminum powder : calcium hydroxide powder : calcium oxide powder =60:20:20,
(4) Sample 4; aluminum powder : calcium hydroxide powder : calcium oxide powder =40:40:20,
(5) Sample 5; aluminum powder : calcium hydroxide powder : calcium oxide powder =40:20:40,
(6) Sample 6; aluminum powder : calcium hydroxide powder : calcium oxide powder =50:30:20,
(7) Sample 7; aluminum powder : calcium hydroxide powder : calcium oxide powder =60:30:10,
(8) Sample 8; aluminum powder : calcium hydroxide powder : calcium oxide powder =30:30:40,
(9) Sample 9; aluminum powder : calcium hydroxide powder : calcium oxide powder =30:20:50,
(10) Sample 10; aluminum powder : calcium hydroxide powder : calcium oxide powder =35:30:35,
(11) Sample 11; aluminum powder : calcium hydroxide powder : calcium oxide powder =35:20:45,
(12) Sample 12; aluminum powder : calcium hydroxide powder : calcium oxide powder =40:50:10,
(13) Sample 13; aluminum powder : calcium hydroxide powder : calcium oxide powder =45:10:45,
(14) Sample 14; aluminum powder : calcium hydroxide powder : calcium oxide powder =45:5:50 and
(15) Sample 15; aluminum powder : calcium hydroxide powder : calcium oxide powder =60:5:35.

### (2) Heat-generating ability

Each of the sample heat-generating compositions was enclosed with the bag made of base material (a non water-repellent nonwoven fabric (made by 100% rayon, MR-50/PP40, manufactured by Kokko Paper Mfg. Co. , Ltd.) having a water permeable rate of about 40 to 44 milliliter/min/cm²) used for measurement of the water permeability. According to the temperature measurement method of Fig. 5, a temperature of the food was measured. In this embodiment, after 25 minutes, in which the reaction continues for 20 minutes and further the heating was kept for 5 minutes, from the heat-generating reaction, a retort-packed rice was measured in temperature in such a manner that a stick type temperature sensor was inserted into the center of the retort-packed rice. Then, whether the samples satisfied the heating condition D (to heat the retort-packed rice to 60°C or higher after 25 minutes) and condition E (to heat the retort-packed rice to 65°C after 25 minutes) was discussed.

Table 3 shows results whether the samples satisfied the heating conditions.

**Table 3**

| Sample No. | amount ratio | | | temperature (°C) after 25 min. | condition D 60°C or higher after 25 min. | condition E 65°C or higher after 25 min. |
|---|---|---|---|---|---|---|
| | aluminum | calcium hydroxide | calcium oxide | | | |
| 1 | 50 | 15 | 35 | 67.3 | ○ | ○ |
| 2 | 60 | 10 | 30 | 72.7 | ○ | ○ |
| 3 | 60 | 20 | 20 | 66.5 | ○ | ○ |
| 4 | 40 | 40 | 20 | 64.3 | ○ | × |
| 5 | 40 | 20 | 40 | 60.2 | ○ | × |
| 6 | 50 | 30 | 20 | 62.4 | ○ | × |
| 7 | 60 | 30 | 10 | 60.7 | ○ | × |
| 8 | 30 | 30 | 40 | 51.3 | × | × |
| 9 | 30 | 20 | 50 | 51.2 | × | × |
| 10 | 35 | 30 | 35 | 53.5 | × | × |
| 11 | 35 | 20 | 45 | 55.3 | × | × |
| 12 | 40 | 50 | 10 | 56.6 | × | × |
| 13 | 45 | 10 | 45 | 57.7 | × | × |
| 14 | 45 | 5 | 50 | 59.0 | × | × |
| 15 | 60 | 5 | 35 | 58.7 | × | × |

Under a low-temperature environment (water temperature is about 5°C), the following is found.
(1) The food heating condition D (to heat the retort-packed rice to 60°C or higher after 25 minutes) is satisfied when the aluminum powder, calcium hydroxide powder and calcium oxide powder has an amount ratio of 40-60:10-40:10-40.
(2) The food heating condition E (to heat the retort-packed rice to 65°C or higher after 25 minutes) is satisfied when the aluminum powder, calcium hydroxide powder and calcium oxide powder has an amount ratio of 50-60:10-20:20-35.

Concerning a weight of the heat-generating composition, the following measurement was carried out. The heat-generating composition containing the aluminum powder, calcium hydroxide powder and calcium oxide powder with an amount ratio of the aluminum powder, calcium hydroxide powder and calcium oxide powder being 50:15:35 was enclosed in the bag to prepare the heat sources each having a weight of 30g, 40g, 50g and 60g. Each of the heat sources was examined in temperature measurement. As a result, all of the heat sources showed substantially the same heat-generating ability. Therefore, a weight of the heat-generating composition is preferably 30g or larger.

### Example 1

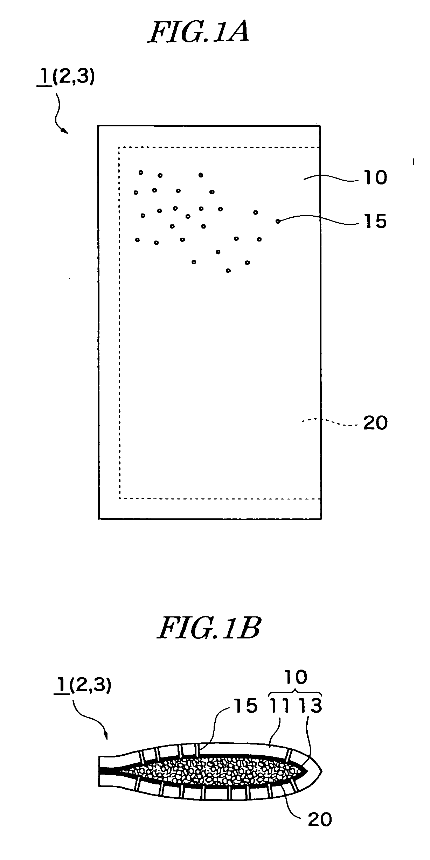

Fig.1 is a drawing showing a structure of a heat source according to the present invention; Fig.1A is a plane drawing and Fig.1B is a cross-section drawing.
The heat source 1 comprises a bag 10 and a heat-generating composition 20 enclosed in the bag 10.

The bag 10 is made of a non water-repellent nonwoven fabric 11 (100% rayon, MR-50/PP40, manufactured by Kokko Paper Mfg. Co., Ltd.). Almost full area of the bag 10 is punched with pinholes 15 in substantially the uniform density. The pinhole 15 has a diameter of 0.1 to 0.3mm. The bag 10 has a water permeable rate, measured by the aforesaid method (as shown in Fig.3), of about 40 milliliter/min/cm². The water permeable rate can be converted from the air permeable rate measured by the gurley type densometer. The bag 10 has a size of 70mmx170mm.

The heat-generating composition 30 is a mixed powder of aluminum powder (#280A, manufactured by MINALCO Co. , Ltd.) of 25g, calcium hydroxide powder (tokusen, manufactured by Tagen lime industry) of 7.5g and calcium oxide powder (manufactured by Tagen lime industry) of 17.5g (an amount ratio ofaluminum:calcium hydroxide: calcium oxide is 50:15:35. A total weight is 50g). The heat-generating composition 20 is enclosed in the bag 10 to produce the heat source 1.

### Example 2

The same heat-generating composition as that of Example 1 (an amount ratio of aluminum:calcium hydroxide:calcium oxide is 50:15:35. A total weight is 50g) was enclosed in the bag 10 having a water permeable rate of about 81 milliliter/min/cm² to produce another heat source 3.

### Example 3

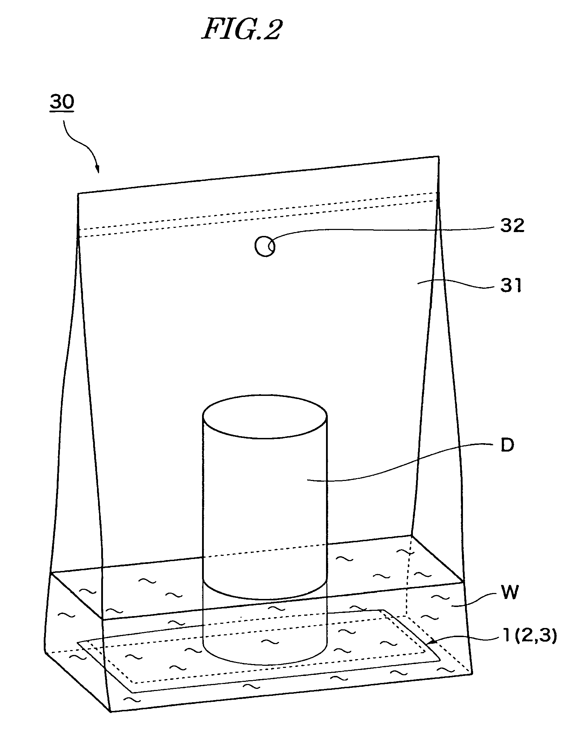

Fig.2 is a drawing showing a heating device according to the present invention. In this embodiment, the heating device is used for heating a retort-packed cooked rice and a retort-packed cooked curry.
The food heating device 30 comprises a heating bag (container) 31 having exhaust vents 32; the heat source 1 shown in Fig.1 and water W for activating a heat-generating reaction. In this embodiment, two circular exhaust vents 32 having a diameter of 5mm are formed. Or, two to four exhaust vents 32 having a diameter of 3 to 7mmmay be formed. Depending on the container, one to two exhaust vents having a diameter of 10 to 15mm, or eight to ten exhaust vents having a diameter of 1 to 2mm may be formed. The shape of the exhaust vent is not limited to a circular shape; may be any shape capable of venting water vapor and hydrogen gas. When the bag is a three sided seal pack, the exhaust vent may have a shape formed by turning the opening of the back.
The heat source 1 is enclosed in an air-tight outer bag during storing in order to prevent the heat-generating composition from contacting moisture in air.

The heat source 1, taken out of the outer bag, the retort-packed cooked rice and the retort-packed cooked curry D were put in the heating bag (container) 31, water of about 5°C in an amount of 130g was added and then the container 31 was sealed. The heat source 1 caused a heat-generating reaction to heat the retort-packed cooked rice and retort-packed cooked curry D in the container 31. Water vapor and hydrogen gas produced by the heat-generating reaction were vent through the exhaust vents 32. And, after 25 minutes from the activation of the heat-generating reaction, the retort-packed cocked rice was heated to 67.3°C. And, leakage of the heat-generating composition did not occur.

### Example 4

In the same food heating device as that of Example 3, the heat source 3 was used in exchange for the heat source 1. As with Example 3, the heat source 3, taken out of the outer bag, and 350 milliliter-plastic bottled tea D were put in the heating bag (container) 31, water of about 20°C in an amount of 130g was added and then the container 31 was sealed. In the same way, the heat source 3, taken out of the outer bag, and a retort-packed cooked rice D were put in the heating bag (container) 31, water of about 5°C in an amount of 130g was added and then the container 31 was sealed.

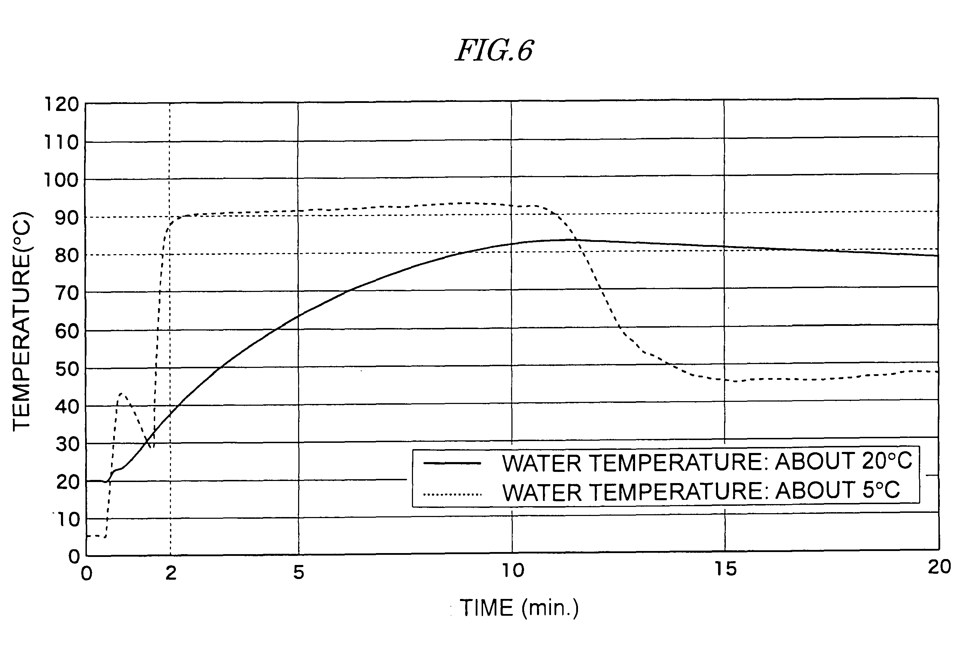

Fig.6 is a graph showing a relation between the measurement time and temperatures.
When an initial temperature of the water to be reacted is 20°C, the water temperature rises to 60°C or higher after 5 minutes from the heat-generating reaction and the risen temperature higher than 80°C is kept after 10 minutes from the reaction. When an initial temperature of the water to be reacted is 5°C, the water temperature rises to 90°C after 2 minutes from the heat-generating reaction and the risen temperature higher than 90°C is kept for about 10 minutes after the reaction. However, the temperature falls down rapidly after 10 minutes and decreases to 50°C or less after 20 minutes. But, the temperature of the retort-packed rice, which was measured by inserting the stick type temperature sensor into the center of the retort-packed rice after 25 minutes, was 60.4°C. This shows that the retort-packed rice was sufficiently heated.

In exchange for the aforesaid non water-repellant nonwoven fabric, another type of non water repellent nonwoven fabricmaybeused, for example, CO40s (manufacturedbyUnitika Co., Ltd.), which has the following properties: basis weight (g/m²); 40, thickness (µm); 330, longitudinal tensile strength (N/5mm); 35, transverse tensile strength (N/5mm); 15, longitudinal extensibility (%); 25 and transverse extensibility (%); 75. The nonwoven fabric was made by a spunlaced method.

A weight ratio of the aluminum power, calcium hydroxide powder and calcium oxide powder, weight of the heat-generating composition and properties are not limited to the aforesaid values.

### Brief description of the drawings

Fig.1 is a drawing showing a structure of a heat source according to the present invention; Fig.1A is a plane drawing and Fig.1B is a cross-section drawing.
Fig.2 is a drawing showing a heating device according to the present invention.
Fig.3 is a drawing showing the water permeable rate measuring method in the present invention.
Fig.4 is a graph showing a relation between the air permeable rate and the water permeable rate.
Fig.5 is a drawing showing the method for measuring the temperature.
Fig.6 is a graph showing a relation between the measurement time and temperatures.

### Explanation of item numbers

- 1,2,3: heat source
- 10: bag
- 11: nonwoven fabric
- 13: water resistant layer
- 15: pinholes
- 20: heat-generating composition
- 30: hood heating device
- 31: heating bag
- 32: exhaust vent

## Claims

1. A food heating device comprising a heat source and a container having an exhaust vent, in which said heat source is put in said container together with a food to be heated and water is added to said container so that said heat source is reacted with said water to generate heat and to heat the food by the generated heat,
wherein said heat source comprises:
a bag formed by a packing material made of a base material of nonwoven fabric of which one surface is laminated with a waterproof layer, said packing material being punched with a plurality of pinholes, and
a heat-generating composition containing aluminum powder in an amount of 40 to 60% by weight, calcium hydroxide powder in an amount of 10 to 40% by weight and calcium oxide powder in an amount of 10 to 40% by weight, enclosed in said bag,
said packing material has a water permeable rate of 13 to 81 milliliter/min/1cm² measured under the following measurement conditions (1) to (4):
(1) ion-exchanged water of 23±3°C is used,
(2) head of water is 27±0.95cm,
(3) a water permeable area of said packing material is 2.85cm², and
(4) the water permeable amount (milliliter) is defined in such a manner that after an amount of the permeated water per unit time gets constant (after a variation in amount of the permeated water per 10 seconds is within 5% at least consecutive three times), an amount of the permeated water measured in any one minute during the measurement for one minute or more is converted into a water permeable amount (milliliter) using a specific gravity of the ion-exchange water of 1.000 (g/cm³).
